# EUROPÄISCHE PATENTSCHRIFT

(11) **EP 2 794 073 B1**
(45) Veröffentlichungstag und Bekanntmachung des Hinweises auf die Patenterteilung: **06.02.2019**
(21) Anmeldenummer: 12813315.4
(22) Anmeldetag: 18.12.2012
(51) Int. Cl.: B01D 61/14, B01D 61/22, B01D 65/02, B24B 37/04, B24B 57/02, C02F 1/44, B01D 63/02

(54) **VERFAHREN ZUM REINIGEN EINES FILTERS UND WIEDERAUFBEREITUNGSVORRICHTUNG**
METHOD FOR CLEANING A FILTER AND RECOVERY APPARATUS
PROCÉDÉ DE NETTOYAGE D'UN FILTRE ET APPAREIL DE RÉCUPÉRATION

(30) Priorität: 19.12.2011 DE 102011056633
(43) Veröffentlichungstag der Anmeldung: 29.10.2014
(73) Patentinhaber: HighQ-Factory GmbH, 63863 Eschau-Hobbach (DE)
(72) Erfinder: BRUMMER, Franz, 84032 Landshut (DE)
(74) Vertreter: Michalski Hüttermann & Partner Patentanwälte mbB
(86) Internationale Anmeldenummer: PCT/EP2012/075983
(87) Internationale Veröffentlichungsnummer: WO 2013/092606

(56) Entgegenhaltungen:
- DE-A1-102009 044 204
- US-A1- 2007 187 326
- US-B1- 6 929 532

## Beschreibung

Die vorliegende Erfindung betrifft ein Verfahren zum Reinigen eines Filters, umfassend die Schritte des Bereitstellens eines Querstromfilters, wobei der Querstromfilter eine Filtermembran umfasst und eingerichtet ist, um einem an der Filtermembran vorbeiströmenden Zulaufstrom einen flüssigen Permeatstrom zu entnehmen und des Anlegens eines Rückspülflüssigkeitsstroms durch die Filtermembran hindurch. Die Erfindung betrifft weiterhin eine gemäß diesem Verfahren reinigbare Wiederaufbereitungsvorrichtung.

Zum Polieren von Halbleitermaterialien hat sich in den vergangenen Jahren das chemischmechanische Polieren (chemical mechanical polishing, CMP) als Standardverfahren etabliert. Insbesondere wird das CMP nach dem Abscheiden funktioneller Schichten auf Halbleiterwafer angewendet, um beim Abscheiden entstandene Unebenheiten auszugleichen. Hierbei wird ein chemisch und mechanisch aktives, kolloidales Poliermittel, die sogenannte Slurry, zwischen dem Halbleiterwafer und einer Polieroberfläche verteilt. Unterstützt durch Relativbewegungen zwischen Halbleiterwafer und Polieroberfläche wird die Halbleiterwaferoberfläche chemisch angegriffen und poliert.

Der Polieroberfläche muss bei derartigen Polierprozessen fortlaufend frischer Slurry zugeführt werden, um eine optimale Polierleistung zu erzielen. Bei dem Polierprozess entsteht Abwasser, welches neben Polierflüssigkeit (in der Regel Wasser und Slurry) Verunreinigungen enthält, die durch den Polierabtrag entstehen. Zudem enthält das Abwasser in der Regel zusätzliche Chemikalien, die den Polierprozess steuern. Diese können je nach Prozesstyp pH-Regulatoren, Oxidiermittel und/oder Stabilisiermittel umfassen. Das Slurry-Abwasser wird in der Regel abgeführt und entsorgt. Da sowohl die Slurry als auch die Polierflüssigkeit in ihrer Anschaffung kostenintensiv sind, bieten Slurry-Wiederaufbereitungsprozesse ein großes Kosteneinsparungspotential.

So offenbart beispielsweise DE 10 2009 044 294 A1 ein Wiederaufbereitungsverfahren und eine Wiederaufbereitungsvorrichtung zur Wiederaufbereitung von Slurry-Abwasser aus einem Halbleiterbearbeitungsprozess, insbesondere aus einem chemisch-mechanischen Polierprozess, wobei die folgenden Verfahrensschritte durchgeführt werden: ein Filtrationsschritt, bei dem fortlaufend frisches Slurry enthaltendes Abwasser einem Kreislaufbehälter zugeführt wird, während fortlaufend Mischabwasser aus dem Kreislaufbehälter entnommen, das entnommene Mischabwasser durch eine Ultrafiltervorrichtung geleitet und hierdurch mittels Flüssigkeitsentzug zu aufkonzentriertem Abwasser aufkonzentriert und das aufkonzentrierte Abwasser in den Kreislaufbehälter geleitet und sich mit dem Inhalt des Kreislaufbehälters vermischt, um das Mischabwasser zu erhalten; und ein dem Filtrationsschritt zeitlich nachfolgender Konzentrationsschritt, bei dem die Zufuhr des frischen Abwassers zum Kreislaufbehälter vermindert oder im Wesentlichen abgestellt ist, während fortlaufend Mischabwasser aus dem Kreislaufbehälter entnommen, das entnommene Mischabwasser durch die Ultrafiltervorrichtung geleitet und hierdurch mittels Flüssigkeitsentzug zu aufkonzentriertem Abwasser aufkonzentriert und das aufkonzentrierte Abwasser in den Kreislaufbehälter geleitet wird.

Gemäß US 6,929,532 beinhaltet eine Polierslurry-Versorgung für einen Halbleiterherstellungsprozess einen Querstromfilter. Dieser ist stromaufwärts von einer Waferpoliervorrichtung positioniert. Der Querstromfilter kann in Form von Hohlfaserfiltern oder Röhrenfiltern vorliegen. Solche Filter können als Ultrafilter oder Mikrofilter ausgebildet sein. Ein Verfahren zum Betreiben eines chemisch-mechanischen Poliersystems wird ebenfalls beschrieben.

US 6,527,969 offenbart ein Verfahren zur Wiederaufbereitung von Polierslurry aus einem chemisch-mechanischen Polierprozess. Dieses Verfahren beinhaltet die Schritte des Rückgewinnens der Polierslurry und des Redispergierens von Schleifpartikeln in der zurückgewonnenen Polierslurry. Insbesondere können die Schleifpartikel durch Zugabe eines Dispergierhilfsmittels, durch ein elektromagnetisches Feld oder durch Ultraschallbestrahlung dispergiert werden.

WO 2010/111291 A2 beschreibt eine Vorrichtung und ein Verfahren zur Wiedergewinnung von Polierslurry und Spülwasser aus einem CMP-Prozess. Weiterhin betrifft diese Veröffentlichung rheologische Messungen und Agglomerationsverhinderung durch den Einsatz von Kreiselpumpen.

EP 1 055 446 A2 beschäftigt sich mit einem Verfahren zur Herstellung einer Halbleitervorrichtung, in welchem anfallendes Abwasser durch Filtration gereinigt wird. Im diesem Verfahren werden durch einen ersten Filterfilm eingefangene Partikel als zweiter Filterfilm genutzt. Das Verstopfen des ersten Filters wird verhindert und eine externe Kraft wie zum Beispiel Gasblasen wirkt auf den zweiten Filterfilm ein, um die Filterkapazität zu erhalten. Wenn zu entfernende Partikel mit dem filtrierten Wasser vermischt werden, wird das das filtrierte Wasser wieder in einen Tank rezirkuliert, in dem das Abwasser gespeichert wird. Nach Überprüfen, ob ein gewünschtes Ergebnis erreicht wurde, wird die Filtration erneut begonnen.

WO 2001/51186 A1 beschreibt ein Querstromfiltrationssystem, umfassend ein Filtrationsmodul mit einer Filtrationsmembran mit einer Retentatseite und einer Permeatseite. Das System beinhaltet weiterhin einen Behälter für ein zu filtrierendes Medium und eine Zuführpumpe zwischen dem Behälter und dem Filtrationsmodul. Durch feste Retentat-Partikel verursachte Verstopfung der Fließwege des Retentats wird auf der Retentatseite der Filtrationsmembran dadurch verhindert, dass auf der Retentatseite der Filtrationsmembran der Druck erniedrigt wird. Dieses erfolgt durch Verbindung mit der Saugseite der Zuführpumpe, wobei der Druck soweit erniedrigt wird, dass das durch die Filtrationsmembran zurückfließende Permeat die Verstopfung löst und zusammen mit diesen Retentat-Partikeln durch die Zuführpumpe abgesogen wird. Auf diese Weise kann auf druckfeste Permeattanks verzichtet werden.

US 2004/069878 A1 offenbart eine Vorrichtung und ein Verfahren zum Wiedergewinnen von Schleifflüssigkeit oder Slurry-Abwasser aus dem Polierschritt in der Herstellung von Halbleitern. Agglomerationen von Schleifkörpern in dem Slurry-Abwasser werden in einer Mühle, durch Ultraschall-Oszillation oder durch Zirkulation unter Druck zerstoßen. Das Slurry-Abwasser wird dann regeneriert und wiederverwendet.

US2007/0187326 offenbart ebenfalls ein Verfahren zum Reinigen eines Querstromfilters durch Rückspülung mit Permeat bei dem das rückgeführte Permeat pulsiert wird. Im Betrieb derartiger Filtrationsanlagen kommt es, wie bereits geschildert, häufig zu Ablagerungen auf der Retentatseite der Filtrationsmembran. Bisherige Lösungsansätze sehen eine mehr oder weniger einfache Rückspülung der Filtrationsmembran vor, um diese Ablagerungen zu entfernen. Dieses ist jedoch nachteilig, wenn entlang der Strömungsrichtung des Retentats die Dicke der Ablagerungen auf der Filtrationsmembran nicht einheitlich ist. Erfahrungen haben gezeigt, dass an der Eintrittsstelle des Retentatstroms die größte Dicke zu erwarten ist und die Dicke der Ablagerungen in Strömungsrichtung gesehen weiter stromab abnimmt. Es ist auch möglich, dass weiter stromab keine Ablagerungen mehr vorhanden sind. Wird in einer solchen Konstellation eine Rückspülung der Filtermembran vorgenommen, sucht sich die Rückspülflüssigkeit den Weg des geringsten Widerstandes und drückt gerade nicht die dicksten und am festesten haftenden Ablagerungen weg, sondern locker sitzende Ablagerungen oder sucht sich einen Weg an den Ablagerungen vorbei durch die Filtermembran. Diese Umstände sind einer längeren Lebensdauer der Filtrationseinheiten abträglich.

Die vorliegende Erfindung hat sich die Aufgabe gestellt, die Nachteile im Stand der Technik zumindest teilweise zu überwinden. Insbesondere hat sie sich die Aufgabe gestellt, ein verbessertes Verfahren zum Reinigen von Filtern bereitzustellen, mit dem sich längere Standzeiten der Filtrationseinheiten realisieren lassen.

Erfindungsgemäß gelöst wird diese Aufgabe durch ein Verfahren zum Reinigen eines Filters, umfassend die Schritte:
A) Bereitstellen eines Querstromfilters, wobei der Querstromfilter eine Filtermembran umfasst und eingerichtet ist, um einem an der Filtermembran vorbeiströmenden Zulaufstrom einen flüssigen Permeatstrom zu entnehmen
   und die Filtermembran eine erste, dem Permeatstrom zugewandte Seite und eine der ersten Seite gegenüberliegenden und dem Zulaufstrom zugewandte zweite Seite umfasst
   und wobei auf der zweiten Seite der Filtermembran zumindest teilweise sich zu entfernende Ablagerungen befinden;
B) Anlegen eines Rückspülflüssigkeitsstroms durch die Filtermembran hindurch,
   wobei
   - vor dem Anlegen des Rückspülflüssigkeitsstroms in Schritt B) sich auf der ersten Seite der Filtermembran befindliches Permeat zumindest teilweise durch ein Gas von der ersten Seite der Filtermembran verdrängt wird, wobei
   - das mit dem Rückspülflüssigkeitsstrom in Kontakt befindliche Gas zumindest während des Schritts B) einen Druck von> 1 bar aufweist; und
   - das Anlegen des Rückspülflüssigkeitsstroms in Schritt B) derart geschieht, dass der Druck des Rückspülflüssigkeitsstroms mehr als einmal zwischen einem Minimaldruck und einem Maximaldruck wechselt.

Der in Schritt A) bereitgestellte Querstromfilter kann auch als sogenannter Cross-Flow-Filter oder Tangential-Flow-Filter bezeichnet werden. Er kann beispielsweise als Hohlfaserfilter oder als Bündel von Hohlfaserfiltern ausgeführt sein. Die Filtermembran ist vorzugsweise aus einem Polymer hergestellt, beispielsweise aus Polyacrylnitril. Es ist weiterhin vorgesehen, dass die Filtermembran zumindest teilweise mit zu entfernenden Ablagerungen belegt ist. Solche Ablagerungen können herausgefilterte Abriebpartikel, Schleifkörperpartikel und dergleichen sein.

Hinsichtlich der Seitenbezeichnungen relativ zur Membran kann die erste Seite der Filtermembran auch als Permeatseite und die zweite Seite auch als Retentatseite bezeichnet werden.

Gemäß Schritt B) wird ein Strom einer Rückspülflüssigkeit durch die Filtermembran hindurch angelegt. Dieses ist so zu verstehen, dass der Rückspülflüssigkeitsstrom die Filtermembran von der ersten Seite (Permeatseite) zur zweiten Seite (Retentatseite) hin passiert. Als Verbesserung gegenüber den bekannten Rückspülverfahren sieht das erfindungsgemäße Verfahren, vereinfacht gesagt, ein pulsierendes Rückspülen der Filtermembran vor.

Hierzu wird zunächst sich auf der ersten Seite (Permeatseite) der Filtermembran befindliches Permeat oder andere Flüssigkeit entfernt. Dieses erfolgt erfindungsgemäß dadurch, dass diese Flüssigkeit durch ein Gas verdrängt wird. Das Gas kann in unkritischen Fällen auch Luft sein, ist aber vorzugsweise ein inertes Gas wie Stickstoff. Zum Verdrängen wird zweckmäßigerweise eine mit dem Querstromfilter verbundene Abwasserleitung samt Ventil verwendet, durch die die Flüssigkeit herausgedrückt wird.

Nach dem Verdrängen kann die Situation auf der ersten Seite (Permeatseite) der Filtermembran so beschrieben werden, dass ein Gaspolster gebildet wurde. Dieses Gaspolster drückt dann gegen den Rückspülflüssigkeitsstrom.

Erfindungsgemäß vorgesehen ist, dass der Druck des Rückspülflüssigkeitsstroms mehr als einmal zwischen einem Minimaldruck und einem Maximaldruck wechselt. Mit anderen Worten pulsiert oder oszilliert der Druck zwischen dem Minimaldruck und dem Maximaldruck, wobei die Oszillation periodisch oder aperiodisch sein kann. Im Fall einer periodischen Oszillation können die Druckschwankungen beispielsweise einen sinusförmigen oder rechteckförmigen Verlauf annehmen. Damit der Rückspülflüssigkeitsstrom auch durch die Filtermembran und nicht lediglich auf der ersten Seite (Permeatseite) entlang strömt, beträgt der Druck des Gaspolsters > 1 bar, vorzugsweise ≥ 3 bar und mehr bevorzugt ≥ 5 bar. Druckangaben in der vorliegenden Erfindung bezeichnen den Relativdruck zum Atmosphärendruck (im Zweifel 1013 mbar).

Das erfindungsgemäße Reinigungsverfahren kann in regelmäßigen Abständen und/oder nach Bedarf, beispielsweise ausgelöst durch gemessene Druckunterschiede durch die Filtrationsmembran hindurch, ausgelöst werden.

Im Ergebnis erreicht man durch eine pulsierende Rückspülung der Filtermembran eine hohe Haftreibung und hohe Beschleunigung der Rückspülflüssigkeit. Dieses wirkt auf die Ablagerungen ein und löst sie ab oder lockert sie zumindest, so dass weitere Reinigungsschritte erfolgreich sein können.

Insgesamt konnte beobachtet werden, dass sich die Standzeit eines zur Beurteilung herangezogenen Ultrafiltrationsmoduls von wenigen Wochen auf ungefähr ein Jahr erhöhen lässt. Dieses Ultrafiltrationsmodul war in einer Anlage zur Aufkonzentrierung von Slurry-Abwässern, wie sie weiter unten beschrieben ist, eingesetzt worden.

Ausführungsformen und weitere Aspekte der vorliegenden Erfindung werden nachfolgend erläutert. Sie können beliebig miteinander kombiniert werden, sofern sich aus dem Zusammenhang nicht eindeutig das Gegenteil ergibt.

In einer Ausführungsform des erfindungsgemäßen Verfahrens umfasst der Rückspülflüssigkeitsstrom in Schritt B) zuvor entnommenes Permeat. Dieses Permeat kann in einem passenden Permeattank gespeichert werden und über eine entsprechend angebrachte Rückspülleitung der Filtermembran zugeführt werden.

In einer weiteren Ausführungsform des erfindungsgemäßen Verfahrens ist der Querstromfilter derart angeordnet, dass der Zulaufstrom in vertikaler Richtung strömt. Vorzugsweise tritt der Zulaufstrom an einem unteren Ende in den Querstromfilter ein, durchströmt ihn in vertikaler Richtung von unten nach oben und verlässt den Querstromfilter als Retentatstrom an einem oberen Ende. Auf diese Weise kann der Einfluss der Schwerkraft auf den durch die Filtermembran durchtretenden Rückspülflüssigkeitsstrom genutzt werden und die Rückspülflüssigkeit sammelt sich am unteren Ende des Filters an.

In einer weiteren Ausführungsform des erfindungsgemäßen Verfahrens ist der Querstromfilter eine Ultrafiltriervorrichtung und der Zulaufstrom umfasst Slurry-Abwasser aus einem Halbleiterbearbeitungsprozess. Bei der Ultrafiltervorrichtung handelt es sich um eine Filtervorrichtung, welche dazu geeignet ist, dem hierin eingeleiteten und sie durchströmenden Mischabwasser Flüssigkeit zu entziehen. In der Regel handelt es sich bei dieser Flüssigkeit um Wasser, es können jedoch auch andere Flüssigkeiten oder Flüssigkeitsmischungen dem Mischabwasser entzogen werden, die möglicherweise in dem Halbleiterbearbeitungsprozess verwendet werden.

Bei der Ultrafiltervorrichtung wird sichergestellt, dass Partikel, die sich in der dem Mischabwasser entzogenen Flüssigkeit befinden, Partikelgrößen von ≥ 0,01 µm bis ≤ 0,1 µm aufweisen. Dies im Unterschied beispielsweise zu einer Mikrofiltration, bei der die entzogene Flüssigkeit Partikel in der Größenordnung von über 0,1 µm aufweisen kann. Anders ausgedrückt, wird vorliegend der Begriff "Ultra" im Ausdruck "Ultrafiltervorrichtung" dazu verwendet, die mittels der Filtervorrichtung zusammen mit der Flüssigkeit aus dem Mischwasser abgetrennte Partikelgröße zu kennzeichnen.

Das Slurry enthaltende Abwasser stammt vorzugsweise aus dem chemisch-mechanischen Polieren (CMP) von Halbleitern. Beim Durchlaufen der Ultrafiltervorrichtung wird das Mischabwasser zu einem aufkonzentrierten Abwasser aufkonzentriert. Das bedeutet, dass die Slurry im aufkonzentrierten Abwasser in einer höheren Volumenkonzentration vorliegt, als in dem Mischabwasser, welches in die Ultrafiltervorrichtung eingeleitet wurde. Das Aufkonzentrieren erfolgt mittels Flüssigkeitsentzugs in der Ultrafiltervorrichtung und führt zu einer Erhöhung der Feststoffkonzentration in dem aufkonzentrierten Abwasser im Vergleich zum Mischabwasser.

In einer weiteren Ausführungsform des erfindungsgemäßen Verfahrens weist das mit dem Rückspülflüssigkeitsstrom in Kontakt befindliche Gas während des Schritts B) einen Druck von ≥ 1,5 bar bis ≤ 2,5 bar auf. Dieses Gas und der Druck des Gases stellen den Gegendruck für die pulsierende Rückspülflüssigkeit dar. Die Höhe des Drucks beeinflusst, inwieweit die Rückspülflüssigkeit auf der Permeatseite der Filtermembran sich durch die verstopfte Membran hindurch oder in eine andere Richtung, in der Regel senkrecht nach oben, bewegt. Somit kann man durch Wahl des Gegendrucks das Ausmaß der pulsierenden Einwirkung der Rückspülflüssigkeit auf die Filtermembran bestimmen. Vorzugsweise beträgt dieser Druck ≥ 1,7 bar bis ≤ 2,3 bar und mehr bevorzugt ≥ 1,9 bar bis ≤ 2,1 bar.

In einer weiteren Ausführungsform des erfindungsgemäßen Verfahrens beträgt in Schritt B) der Minimaldruck ≥ 0 bar bis ≤ 0,5 bar und/oder der Maximaldruck ≥ 2,5 bar bis ≤ 3 bar. Hierdurch wird die Amplitude der Druckschwankungen für die Rückspülflüssigkeit festgelegt. Vorzugsweise beträgt der Minimaldruck ≥ 0,01 bar bis ≤ 0,4 bar und/oder der Maximaldruck ≥ 2,6 bar bis ≤ 2,9 bar, mehr bevorzugt ≥ 0,1 bar bis ≤ 0,3 bar für den Minimaldruck und/oder ≥ 2,7 bar bis ≤ 2,8 bar für den Maximaldruck.

In einer weiteren Ausführungsform des erfindungsgemäßen Verfahrens wechselt in Schritt B) der Druck des Rückspülflüssigkeitsstroms mit einer Frequenz von ≥ 0,5 Hz bis ≤ 1 Hz zwischen dem Minimaldruck und dem Maximaldruck. Hierdurch wird ein Frequenzbereich für das pulsierende Rückspülen bestimmt. Vorzugsweise beträgt diese Frequenz ≥ 0,55 Hz bis ≤ 0,95 Hz und mehr bevorzugt ≥ 0,6 Hz bis ≤ 0,9 Hz. Es ist weiterhin möglich, dass die Frequenz während des Rückspülvorgangs im Rahmen des technisch Möglichen konstant bleibt.

In einer weiteren Ausführungsform des erfindungsgemäßen Verfahrens wird nach Schritt B) der folgende Schritt durchgeführt:
C) Kontaktieren der zweiten Seite der Filtermembran mit einer Flüssigkeit, welche darin verteilte Gasblasen umfasst und wobei der Druck innerhalb der Gasblasen mehr als einmal zwischen einem Minimaldruck und einem Maximaldruck wechselt. Diese Flüssigkeit kann die Rückspülflüssigkeit und insbesondere auch eine zuvor entnommene Permeatflüssigkeit sein. Vorzugsweise beträgt dieser Minimaldruck ≥ 0 bar bis ≤ 0,5 bar und/oder dieser Maximaldruck ≥ 2,5 bar bis ≤ 3 bar, mehr bevorzugt ≥ 0,01 bar bis ≤ 0,4 bar für diesen Minimaldruck und/oder ≥ 2,6 bar bis ≤ 2,9 bar für diesen Maximaldruck. Hinsichtlich der Frequenz für das Wechseln zwischen dem Minimal- und Maximaldruck beträgt diese vorzugsweise ≥ 0,5 Hz bis ≤ 1 Hz und mehr bevorzugt ≥ 0,55 Hz bis ≤ 0,95 Hz. Es ist weiterhin möglich, dass diese Frequenz im Rahmen des technisch Möglichen konstant bleibt.

Das Spülen des Inneren (Retentatseite) des Filters durch ein Gas-Flüssigkeitsgemisch ist besonders effektiv. Bedingt durch dicke Ablagerungsschichten treten gerade an einem unteren Ende des Filters höhere Geschwindigkeiten auf, wenn das Gas-Flüssigkeitsgemisch durch solche Verengungen strömt. Durch die Druckschwankungen treten in den Gasblasen schnelle Volumenschwankungen (Explosionen und Implosionen) auf. Dieses wirkt sehr abtragend auf die Ablagerungen. Abgelöste Ablagerungen können mit der Flüssigkeit weggespült werden.

In einer weiteren Ausführungsform des erfindungsgemäßen Verfahrens wird das Verfahren in einer Anlage durchgeführt, umfassend:
einen Querstromfilter mit einer Filtermembran, einer Zulaufleitung für ein zu filtrierendes Stoffgemisch, einer Abführleitung für den Querstromfilter verlassendes Retentat, einer Flüssigkeitsentzugsleitung für den Querstromfilter verlassendes Permeat sowie einer Rückspülleitung;
wobei die Abführleitung mit einer Gasbeaufschlagungsleitung verbunden ist, in welcher ein erstes steuerbares Ventil angeordnet ist;
wobei die Gasbeaufschlagungsleitung und die Flüssigkeitsentzugsleitung durch eine Verbindungsleitung miteinander verbunden sind, in welcher ein zweites steuerbares Ventil angeordnet ist und das erste steuerbare Ventil in der Gasbeaufschlagungsleitung zwischen der Verbindungsleitung und der Abführleitung angeordnet ist;
wobei in der Flüssigkeitsentzugsleitung ein drittes steuerbares Ventil angeordnet ist und wobei die Verbindung zwischen der Flüssigkeitsentzugsleitung und der Verbindungsleitung zwischen dem Querstromfilter und dem dritten steuerbaren Ventil angeordnet ist;
wobei in der Rückspülleitung ein viertes steuerbares Ventil angeordnet ist; und
wobei die Zulaufleitung mit einer Abwasserleitung verbunden ist, in welcher ein fünftes steuerbares Ventil angeordnet ist.

Die steuerbaren Ventile können beispielsweise Magnetventile sein und können mit einer zentralen Steuerungseinheit verbunden sein, welche über Öffnen und Schließen der Ventile den Ablauf des erfindungsgemäßen Verfahrens sicherstellt.

Es ist bevorzugt, dass vor während und nach Schritt B) das erste bis fünfte steuerbare Ventil nacheinander wie folgt gesteuert werden:

| | **Steuerbares Ventil:** | | | | |
|---|---|---|---|---|---|
| **Nr.** | **Erstes** | **Zweites** | **Drittes** | **Viertes** | **Fünftes** |
| **1** | Geschlossen | Geöffnet | Geschlossen | Geschlossen | Geöffnet |
| **2** | Geschlossen | Geschlossen | Geschlossen | Pulsierend | Geöffnet |
| **3** | Geschlossen | Geschlossen | Pulsierend | Geöffnet | Geöffnet |

Der Eintrag "Pulsierend" ist so zu verstehen, dass sich das jeweilige steuerbare Ventil mehr als einmal öffnet und schließt. Schließfrequenzen können für die einzelnen Ventile unabhängig voneinander beispielsweise in einem Bereich von ≥ 0,5 Hz bis ≤ 1 Hz liegen.

Weiter bevorzugt ist es, dass das erste bis fünfte steuerbare Ventil nacheinander weiterhin wie folgt gesteuert werden:

| | **Steuerbares Ventil:** | | | | |
|---|---|---|---|---|---|
| **Nr.** | **Erstes** | **Zweites** | **Drittes** | **Viertes** | **Fünftes** |
| **4** | Geöffnet | Geöffnet | Geschlossen | Geöffnet | Pulsierend |
| **5** | Geöffnet | Geschlossen | Geschlossen | Geöffnet | Pulsierend |
| **6** | Geöffnet | Geschlossen | Geschlossen | Geschlossen | Pulsierend |

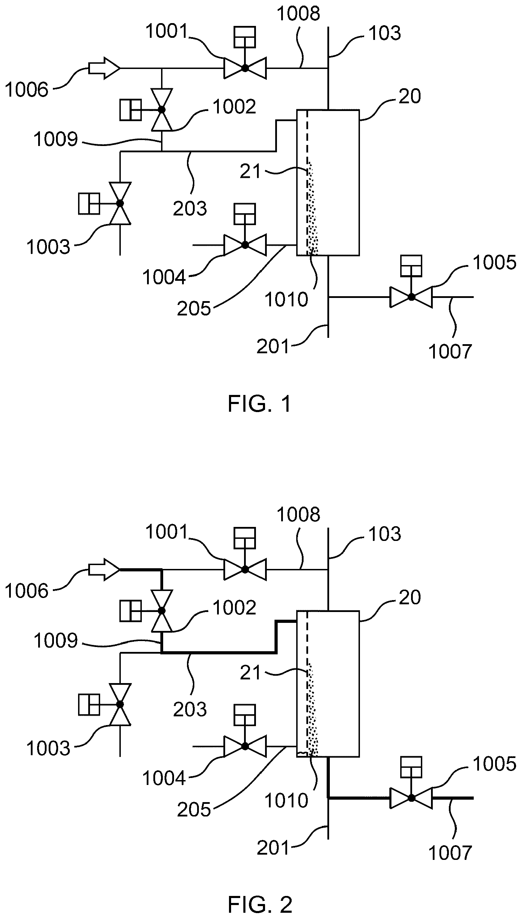

Eine nähere Erläuterung dieser Schritte Nr. 1 bis 6 erfolgt in der Beschreibung der nachfolgenden Figuren 2 bis 7.

Eine Ausführungsform nicht gemäß der Erfindung ist ein Filtersystem, umfassend:
einen Querstromfilter mit einer Filtermembran, einer Zulaufleitung für ein zu filtrierendes Stoffgemisch, einer Abführleitung für den Querstromfilter verlassendes Retentat, einer Flüssigkeitsentzugsleitung für den Querstromfilter verlassendes Permeat sowie einer Rückspülleitung;
wobei die Abführleitung mit einer Gasbeaufschlagungsleitung verbunden ist, in welcher ein erstes steuerbares Ventil angeordnet ist;
wobei die Gasbeaufschlagungsleitung und die Flüssigkeitsentzugsleitung durch eine Verbindungsleitung miteinander verbunden sind, in welcher ein zweites steuerbares Ventil angeordnet ist und das erste steuerbare Ventil in der Gasbeaufschlagungsleitung zwischen der Verbindungsleitung und der Abführleitung angeordnet ist;
wobei in der Flüssigkeitsentzugsleitung ein drittes steuerbares Ventil angeordnet ist und wobei die Verbindung zwischen der Flüssigkeitsentzugsleitung und der Verbindungsleitung zwischen dem Querstromfilter und dem dritten steuerbaren Ventil angeordnet ist;
wobei in der Rückspülleitung ein viertes steuerbares Ventil angeordnet ist; und
wobei die Zulaufleitung mit einer Abwasserleitung verbunden ist, in welcher ein fünftes steuerbares Ventil angeordnet ist.

In einer bevorzugten Ausführungsform des Filtersystems ist der Querstromfilter eine Ultrafiltriervorrichtung. Er kann beispielsweise als Hohlfaserfilter oder als Bündel von Hohlfaserfiltern ausgeführt sein.

Das erfindungsgemäße Verfahren und das Filtersystem findet bevorzugt Anwendung in der Wiederaufbereitung von Slurry-Abwasser, insbesondere von Slurry-Abwasser aus einem Halbleiterbearbeitungsprozess wie dem CMP-Prozess. Daher ist ein weiterer Gegenstand der vorliegenden Erfindung eine Wiederaufbereitungsvorrichtung zur Wiederaufbereitung von Slurry-Abwasser aus einem Halbleiterbearbeitungsprozess, umfassend:
- ein Filtersystem wie zuvor geschildert;
- einen Kreislaufbehälter zum Aufnehmen Slurry enthaltenden Abwassers;
- eine mit dem Kreislaufbehälter verbundene Abwasserzuführleitung;
- einen über eine Zulaufleitung für ein zu filtrierendes Stoffgemisch mit dem Kreislaufbehälter verbundenen Querstromfilter, welcher Teil des erfindungsgemäßen Filtersystems ist, zum Aufkonzentrieren fortlaufend aus dem Kreislaufbehälter entnommenen Mischabwassers mittels Flüssigkeitsentzug;
- eine Abwasserrückführleitung zum Leiten des aufkonzentrierten Abwasser in den Kreislaufbehälter; und
- eine Steuerungsvorrichtung, welche eingerichtet ist,
zeitlich nacheinander einen Filtrationsschritt, bei dem während einer fortlaufenden Entnahme von Mischabwasser aus dem Kreislaufbehälter und seiner Aufkonzentrierung mittels der Ultrafiltervorrichtung dem Kreislaufbehälters fortlaufend frisches Abwasser zugeführt wird, und einen Konzentrationsschritt durchzuführen, bei dem während der fortlaufenden Entnahme von Mischabwasser aus dem Kreislaufbehälter und seiner Aufkonzentrierung mittels der Ultrafiltervorrichtung die Zufuhr des frischen Abwassers zum Kreislaufbehälter vermindert oder im Wesentlichen abgestellt ist; und weiterhin ein erfindungsgemäßes Verfahren ablaufen zu lassen.

Die vorliegende Erfindung wird in Verbindung mit den nachfolgenden Figuren weiter beschrieben, ohne jedoch darauf beschränkt zu sein. Es zeigen:
- FIG. 1: ein reinigbares Filtersystem
- FIG. 2-7: Schritte eines erfindungsgemäßen Verfahrens
- FIG. 8: eine Wiederaufbereitungsanlage zur Wiederaufbereitung von Slurry-Abwasser

FIG. 1 zeigt ein reinigbares Filtersystem, mit welchem auch das erfindungsgemäße Verfahren durchgeführt werden kann. Ein Querstromfilter 20, welcher vorzugsweise als Ultrafiltrationseinheit ausgeführt ist, beinhaltet eine Filtermembran 21 und ist eingerichtet, um einem an der Filtermembran 21 vorbeiströmenden Zulaufstrom einen flüssigen Permeatstrom zu entnehmen. Dazu führt in den Querstromfilter 20 eine Zulaufleitung 201 hinein für ein zu filtrierendes Stoffgemisch Zulaufstrom, welches beispielsweise Slurry-Abwasser aus einem CMP-Prozess sein kann, und aus ihm heraus führt eine Abführleitung 103 für das den Querstromfilter 20 verlassende Retentat aufkonzentriertes Abwasser.

Um den Einfluss der Schwerkraft auf Rückspülflüssigkeit beim Reinigen des Filtersystems nutzen zu können, ist der Querstromfilter 20 vorzugsweise so aufgestellt, dass das zu filtrierende Stoffgemisch in senkrechter Richtung von unten nach oben an der Filtermembran 21 vorbeiströmt.

Weiterhin weist der Querstromfilter 20 eine Flüssigkeitsentzugsleitung 203 für den Querstromfilter 20 verlassendes Permeat sowie einer Rückspülleitung 205 auf. Die Flüssigkeitsentzugsleitung 203 ist in Strömungsrichtung des zu filtrierenden Stoffgemisches gesehen stromabwärts von der Rückspülleitung 205 angeordnet.

In geometrischer Hinsicht werden eine erste, dem Permeatstrom zugewandte Seite (Permeatseite) und eine der ersten Seite gegenüberliegenden und dem Zulaufstrom zugewandte zweite Seite (Retentatseite) der Filtermembran 21 gebildet. In FIG. 1 liegt die erste Seite links von der Filtermembran 21 und die zweite Seite rechts davon.

In FIG. 1 ist weiterhin dargestellt, dass sich auf der zweiten Seite der Filtermembran 21 zumindest teilweise sich zu entfernende Ablagerungen 1010, beispielsweise Abrieb oder aggregierte Slurry-Partikel aus einem CMP-Prozess, befinden. Auf Höhe des Zulaufeintritts durch die Leitung 201 weist die Schicht der Ablagerungen 1010 die größte Dicke auf und haftet hier auch am festesten auf der Filtermembran 21. In Strömungsrichtung des Zulaufstroms gesehen stromabwärts nimmt die Schichtdicke der Ablagerungen 1010 kontinuierlich ab.

Es ist leicht einzusehen, dass bei einer entsprechend fest haftenden und die Filtermembran 21 verschließenden Schicht von Ablagerungen 1010 im Rahmen einer einfachen Rückspülung der Filtermembran 21 die Rückspülflüssigkeit auf der ersten (linken) Seite der Membran 21 solange einfach hochsteigen würde, bis sie dem Weg des geringsten Widerstandes folgend durch den nicht mit Ablagerungen 1010 versehenen Teil der Filtermembran 21 durchtreten würde.

Im erfindungsgemäßen Filtersystem ist die Abführleitung 103 mit einer Gasbeaufschlagungsleitung 1008 verbunden, in welcher ein erstes steuerbares Ventil 1001 angeordnet ist. Über diese Leitung 1008 kann mittels einer Gaseintrittsstelle 1006 ein Gas, vorzugsweise ein Inertgas wie Stickstoff, in das System eingeführt werden. Weiterhin sind die Gasbeaufschlagungsleitung 1008 und die Flüssigkeitsentzugsleitung 203 durch eine Verbindungsleitung 1009 miteinander verbunden sind, in welcher ein zweites steuerbares Ventil 1002 angeordnet ist. Das erste steuerbare Ventil 1001 ist in der Gasbeaufschlagungsleitung 1008 zwischen der Verbindungsleitung 1009 und der Abführleitung 103 angeordnet. So kann mittels des ersten steuerbaren Ventils 1001 und des zweiten steuerbaren Ventils 1002 bestimmt werden, auf welche Seite der Filtermembran 21 Gas aus der Gaseintrittsstelle 1006 beaufschlagt wird.

In der Flüssigkeitsentzugsleitung 203 ist ein drittes steuerbares Ventil 1003 angeordnet, wobei die Verbindung zwischen der Flüssigkeitsentzugsleitung 203 und der Verbindungsleitung 1009 zwischen dem Querstromfilter 20 und dem dritten steuerbaren Ventil 1003 angeordnet ist. In Strömungsrichtung eines ausströmenden Permeats gesehen befindet sich das dritte steuerbare Ventil 1003 somit stromabwärts von der Verbindung zum zweiten steuerbaren Ventil 1002 und der Verbindungsleitung 1009.

In der Rückspülleitung 205 schließlich ist ein viertes steuerbares Ventil 1004 angeordnet und die Zulaufleitung 201 ist mit einer Abwasserleitung 1007 verbunden, in welcher ein fünftes steuerbares Ventil 1005 angeordnet ist.

FIG. 2 zeigt einen ersten Schritt im erfindungsgemäßen Verfahren. Ausgehend von dem in FIG. 1 dargestellten Filtersystem wird sich auf der ersten Seite der Filtermembran 21 befindliches Permeat zumindest teilweise durch ein Gas von der ersten Seite der Filtermembran verdrängt. Die von einem Fluid - Gas oder Flüssigkeit - durchflossenen Leitungen sind schematisch mit dickeren Linien eingezeichnet. Zum Verdrängen des Permeats werden das zweite steuerbare Ventil 1002 und das fünfte steuerbare Ventil 1005 geöffnet und das erste, dritte und vierte steuerbare Ventil 1001, 1003, 1004 sind geschlossen. Über den Gaseinleitungspunkt 1006 beaufschlagtes Gas drückt das Permeat durch die Filtermembran 21 über die Abwasserleitung 1007 aus dem System. Dieses wird durch den schematisch eingezeichneten niedrigen Flüssigkeitspegel auf der ersten Seite der Filtermembran 21 weiter verdeutlicht.

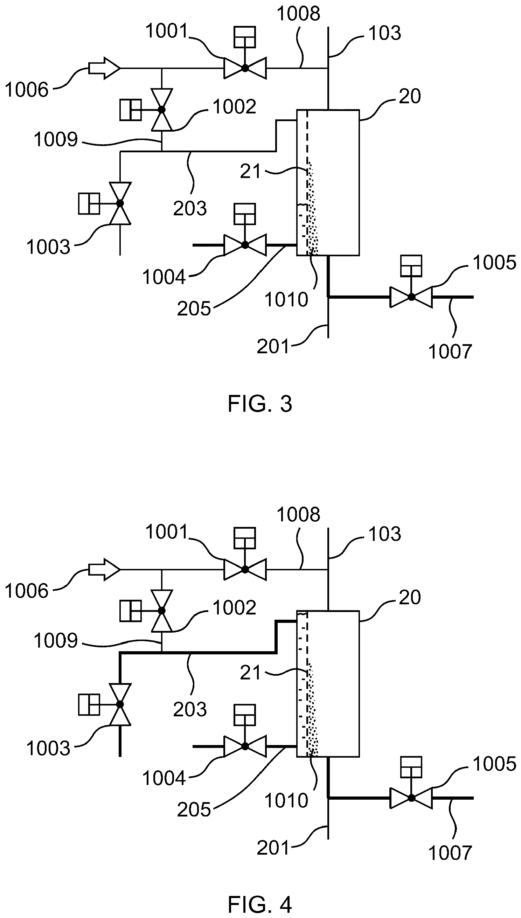

FIG. 3 zeigt einen weiteren Schritt im erfindungsgemäßen Verfahren, in dem die Filtermembran 21 einer pulsierenden Rückspülung unterworfen wird. Hierzu wird im Querstromfilter 20 ein Gaspolster aufgebaut, welches für den nötigen Gegendruck bei der Rückspülung sorgt. Das erste, zweite und dritte steuerbare Ventil 1001, 1002, 1003 sind geschlossen und das fünfte steuerbare Ventil ist geöffnet. Das in der Rückspülleitung 205 befindliche vierte steuerbare Ventil wird pulsierend betrieben, das heißt es wird wiederholt geöffnet und wieder geschlossen. Durch das pulsierende Rückspülen werden die Ablagerungen 1010 an der Filtermembran aufgelockert oder können auch schon abgelöst werden.

FIG. 4 beschreibt einen weiteren Schritt im erfindungsgemäßen Verfahren, nämlich das pulsierende Verdrängen des Gaspolsters durch Rückspülflüssigkeit. Hierzu wird das vierte steuerbare Ventil geöffnet, so dass Rückspülflüssigkeit in den Querstromfilter 20 einströmen kann. Durch pulsierenden Betrieb des dritten steuerbaren Ventils 1003 steigt die Rückspülflüssigkeit auf der linken Seite der Filtermembran 21 pulsierend weiter hoch und drückt das Gas über die Flüssigkeitsentzugsleitung 203 und das dritte steuerbare Ventil 1003 heraus. Hierbei werden die Ablagerungen 1010 auch in den oberen Bereichen der Filtermembran 21 gelockert. Das erste und das zweite steuerbare Ventil 1001, 1002 sind geschlossen und das fünfte steuerbare Ventil 1005 ist geöffnet. Dann kann durch die Filtermembran 21 durchtretende Flüssigkeit aus dem Querstromfilter 20 entfernt werden.

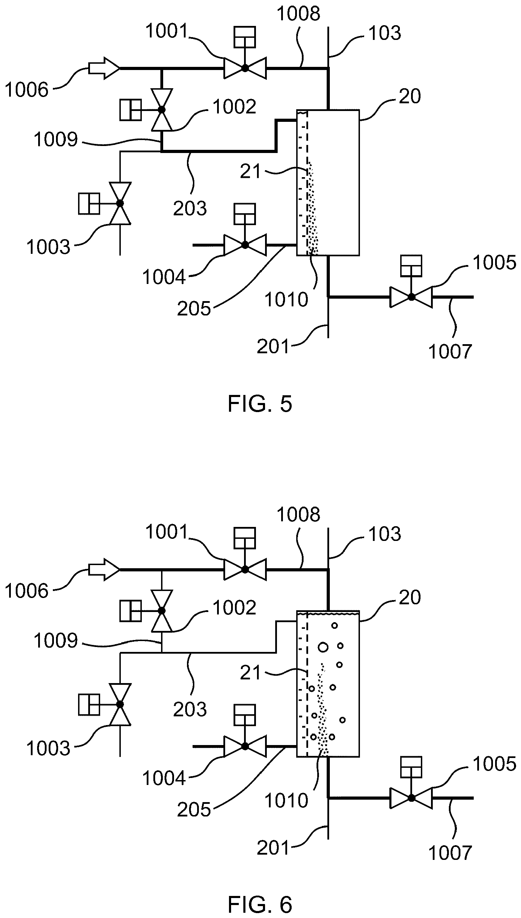

FIG. 5 zeigt einen weiteren Schritt im erfindungsgemäßen Verfahren, in dem beaufschlagtes Gas angefeuchtet wird. Dieses verhindert das Verblocken der Filtermembran 21 durch antrocknende Feststoffe, beispielsweise durch antrocknende Slurryreste. Das erste, zweite und vierte steuerbare Ventil 1001, 1002, 1004 sind geöffnet und das fünfte steuerbare Ventil 1005 wird pulsierend betrieben. Das dritte steuerbare Ventil 1003 ist geschlossen. Durch den Druck der über Leitung 205 einströmenden Flüssigkeit steigt Flüssigkeit über Leitungen 203 und 1009 in Leitung 1008, wo es zum Kontakt mit Gas kommt und das angefeuchtete Gas auf die zweite (rechte) Seite der Filtermembran 21 in den Querstromfilter 20 gelangt.

FIG. 6 zeigt einen weiteren Schritt im erfindungsgemäßen Verfahren, in welchem das Innere des Querstromfilters 20 einschließlich der zweiten Seite der Filtermembran 21 mit einem Gas-Flüssigkeitsgemisch pulsierend gespült werden. Dazu sind das erste und das vierte steuerbare Ventil 1001, 1004 geöffnet und das fünfte steuerbare Ventil wird pulsierend betrieben. Das zweite und dritte steuerbare Ventil 1002, 1003 sind geschlossen. Durch das Pulsieren des fünften steuerbaren Ventils 1005 entstehen in den im Inneren des Querstromfilters befindlichen und in FIG. 6 schematisch dargestellten Gasbläschen Druckschwankungen, welches sehr abtragend auf die Ablagerungen 1010 wirkt. Die Partikel werden von der Flüssigkeit im Querstromfilter 20 über die Leitung 1007 entfernt.

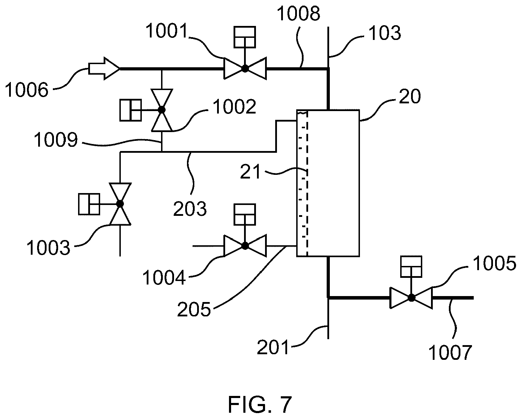

FIG. 7 zeigt einen letzten Schritt im erfindungsgemäßen Verfahren. Hier wird aus dem Inneren des Querstromfilters 20 verbliebene Flüssigkeit durch Gasüberdruck aus dem Querstromfilter 20 herausgespült. Das erste steuerbare Ventil 1001 ist geöffnet und das fünfte steuerbare Ventil 1005 ist geöffnet oder wird pulsierend betrieben. Das zweite, dritte und vierte steuerbare Ventil 1002, 1003, 1004 sind geschlossen.

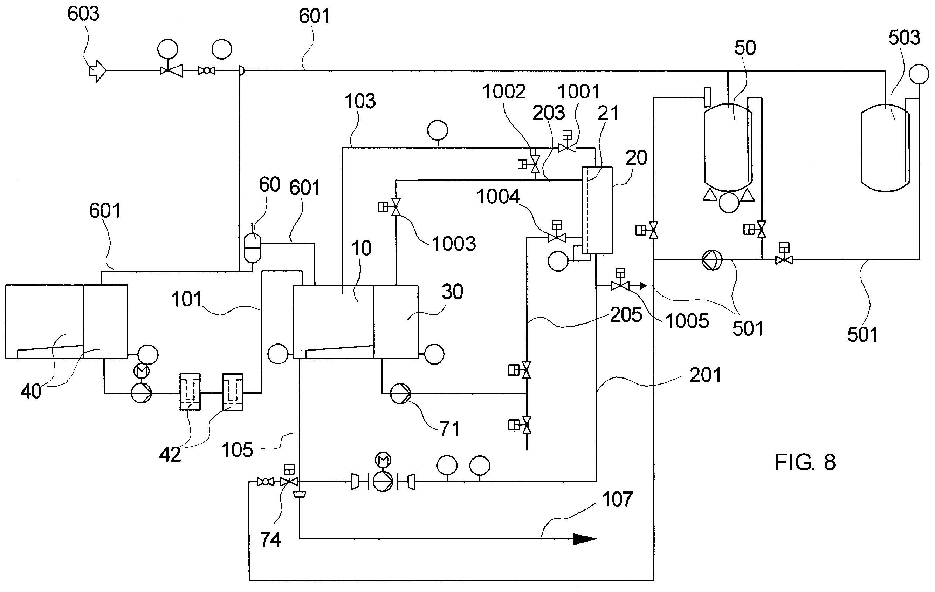

FIG. 8 zeigt ein Diagramm mit dem schematischen Aufbau einer Wiederaufbereitungsvorrichtung für Slurry-Abwasser. Zentrale Komponenten der Wiederaufbereitungsvorrichtung bilden ein Kreislaufbehälter 10 und eine Ultrafiltervorrichtung 20. Der Kreislaufbehälter 10 und die Ultrafiltervorrichtung 20 bilden zusammen mit einer Mischabwasser-Entnahmeleitung 105, einer Ultrafilterzuführleitung 201 und einer Abwasserrückführleitung 103 einen Kreislauf zum Aufkonzentrieren des zuvor in den Kreislaufbehälter 10 geleiteten Abwassers. Der Kreislaufbehälter 10 hat vorliegend ein Fassungsvermögen von etwa 500 Litern.

Weiterhin umfasst diese Wiederaufbereitungsvorrichtung ein erfindungsgemäßes reinigbares Filtersystem, wie es in Verbindung mit FIG. 1 bis 7 erläutert wurde.

Beim Durchlauf durch die Ultrafiltervorrichtung 20 wird dem Mischabwasser Flüssigkeit entzogen, das sich in einem Flüssigkeitskreislauf umfassend einen Flüssigkeitsbehälter 30, eine Flüssigkeitsentzugsleitung 203 und eine Rückspülleitung 205 befindet, wobei Letztere jedoch nur zeitweise zum Einsatz kommt. Bei der Ultrafiltervorrichtung 20 in der vorliegenden Ausführungsform handelt es sich um einen Membranfilter mit einer Membran 21, vorzugsweise einer Polymermembran, beispielsweise aus kostengünstigem und haltbarem Polyacrylnitril. Bei der dem Mischabwasser entzogenen Flüssigkeit handelt es sich somit um ein Permeat. Der Flüssigkeitsbehälter 30 wird im Folgenden deshalb auch als Permeattank 30 bezeichnet. Der Permeattank 30 hat im vorliegenden Beispiel ein Fassungsvermögen von etwa 200 Litern.

Darüber hinaus sind in FIG. 8 Vorlagetanks 40 dargestellt, in denen das Slurry enthaltende Abwasser aufbewahrt wird, bevor es über Vorfilter 42 entlang einer Abwasserzuführleitung 101 in den Kreislaufbehälter 10 gelangt.

Über einen N₂-Zulauf 603 wird die Wiederaufbereitungsvorrichtung mit Stickstoff versorgt, welcher mittels eines N₂-Befeuchters 60 befeuchtet und über N₂-Leitungen 501 den Vorlagetanks 40, dem Kreislaufbehälter 10 und den NH₃-Behältern 50, 503 zugeführt wird. In dem Vorlagetank 40 und dem Kreislaufbehälter 10 verhindert, eine derartige feuchte N₂-Überlagerung eine Krustenbildung von trockener Slurry an Tank- beziehungsweise Behälterwänden. Andernfalls bestünde die Gefahr, dass trockene Slurry-Partikel wieder in den wiederaufbereiteten Slurry gelangen und später erhebliche Kratzer auf den im Halbleiterbearbeitungsprozess bearbeiteten Halbleitersubstraten verursachen können. Einmal getrocknete Slurry kann nicht wieder stabilisiert werden.

Nachfolgend wird zunächst ein Filtrationsschritt beschrieben. Mittels einer Frischabwasserpumpe 73 wird in einem der Vorlagetanks 40 gespeichertes, frisches Abwasser über die Abwasserzuführleitung 101 in den Kreislaufbehälter 10 eingeleitet. Die Zufuhr frischen Abwassers erfolgt fortlaufend, während Mischabwasser mittels der Kreislaufpumpe 70 über die Mischabwasser-Entnahmeleitung 105 aus dem Kreislaufbehälter 10 heraus gepumpt und über die Ultrafilterzuführleitung 201 durch die Ultrafiltervorrichtung 20 geleitet wird. Das aus der Ultrafiltervorrichtung 20 austretende aufkonzentrierte Abwasser wird über die Abwasserrückführleitung 103 zurück in den Kreislaufbehälter 10 geleitet. Beim Durchlaufen der Ultrafiltervorrichtung 20 wird dem Abwasser Flüssigkeit beziehungsweise Permeat entzogen, welches über die Flüssigkeitsentzugsleitung 203 in den Permeattank 30 geleitet wird. Das Permeat kann anschließend mit Hilfe einer Pumpe 71 über den Flüssigkeitsbehälter-Ausgang 301 aus dem Permeattank 30 entnommen und über die Flüssigkeitsnutzleitung 303 einem Nutzer zur Verfügung gestellt werden. Beispielsweise kann das Permeats an eine Halbleiterbearbeitungsvorrichtung zurück geleitet werden. Hierzu kann es notwendig sein, das Permeat zunächst weiteren Behandlungsschritten zu unterziehen. Vorzugsweise wird jedoch das Permeat aus der Flüssigkeitsnutzleitung 303 entnommen und ohne zusätzliche Behandlung, insbesondere ohne weitere Filterung, dem Halbleiterbearbeitungsprozess zugeführt, aus dem das frische Abwasser stammt, beispielsweise einem CMP-Prozess.

Die Filtertätigkeit in der Ultrafiltervorrichtung 20 wird von einer Membran 21 übernommen, welche für das Permeat durchlässig ist. Um zu vermeiden, dass sich auf der Membran 21 ein Filterkuchen aus den Filterablagerungen bildet, wird die Membran 21 bei Bedarf mittels des zuvor beschriebenen erfindungsgemäßen Verfahrens gereinigt.

Der vorangehend erläuterte Kreislauf des Abwassers zwischen dem Kreislaufbehälter 10 und der Ultrafiltervorrichtung 20 wird auch während eines Konzentrationsschrittes weiterhin im Wesentlichen aufrechterhalten. Es wird somit weiterhin Mischabwasser aus dem Kreislaufbehälter 10 über die Mischabwasser-Entnahmeleitung 105 entnommen und über die Ultrafilterzuführleitung 201 durch die Ultrafiltervorrichtung 20 geleitet. Von dort wird aufkonzentriertes Abwasser über die Abwasserrückführleitung 103 in den Kreislaufbehälter 10 geleitet. Das dem Mischabwasser in der Ultrafiltervorrichtung 20 entzogene Permeat wird über die Flüssigkeitsentzugsleitung 203 in den Permeattank 30 geleitet, und von dort über den Flüssigkeitsbehälter-Ausgang 301 und die Flüssigkeitsnutzleitung 303 für die weitere Nutzung bereitgestellt.

Im Unterschied zum Filtrationsschritt wird jedoch kein frisches Abwasser in den Kreislaufbehälter 10 geleitet. Die Frischabwasserpumpe 73 bleibt in dieser Phase des Wiederaufbereitungsverfahrens somit inaktiv. Stattdessen wird jedoch dem Mischabwasser in der Mischabwasser-Entnahmeleitung 105 Ammoniak (NH₃) aus dem NH₃-Behälter 50 über einem der NH₃-Leitungen 601 hinzugefügt. Wenn der NH₃-Behälter 50 aufgebraucht ist, sorgt ein NH₃-Vorratsbehälter 503 für die Versorgung mit NH₃. Ammoniak wirkt als Agglomerationshemmer und verhindert ein Verklumpen der Feststoffe in dem Mischabwasser, dessen Feststoffkonzentration im Konzentrationsschritt aufgrund des Ausbleibens des frischen Slurry-Abwassers schnell ansteigt.

Ein Abfüllschritt kann eingeleitet werden, nachdem das Mischabwasser in dem Kreislaufbehälter 10 mittels des Konzentrationsschrittes derart aufkonzentriert wurde, dass seine Feststoffkonzentration einen vorbestimmten Hochkonzentrationsschwellwert übersteigt. Die Wiederaufbereitungsvorrichtung wird mittels einer Mehrzahl an Messgeräten 72 überwacht, welche Durchflusssensoren, Temperatursensoren, Konzentrationssensoren, Feuchtigkeitssensoren und dergleichen umfassen können. Die Feststoffkonzentration wird anhand von Konzentrationsmessern ermittelt und in einer Steuervorrichtung (in der Figur nicht dargestellt) mit dem Hochkonzentrationsschwellwert verglichen.

## Patentansprüche

1. Verfahren zum Reinigen eines Filters, umfassend die Schritte:
A) Bereitstellen eines Querstromfilters (20), wobei der Querstromfilter (20) eine Filtermembran (21) umfasst und eingerichtet ist, um einem an der Filtermembran (21) vorbeiströmenden Zulaufstrom einen flüssigen Permeatstrom zu entnehmen
und die Filtermembran (21) eine erste, dem Permeatstrom zugewandte Seite und eine der ersten Seite gegenüberliegenden und dem Zulaufstrom zugewandte zweite Seite umfasst
und wobei auf der zweiten Seite der Filtermembran (21) zumindest teilweise sich zu entfernende Ablagerungen (1010) befinden;
B) Anlegen eines Rückspülflüssigkeitsstroms durch die Filtermembran (21) hindurch,
**dadurch gekennzeichnet, dass**
- vor dem Anlegen des Rückspülflüssigkeitsstroms in Schritt B) sich auf der ersten Seite der Filtermembran (21) befindliches Permeat zumindest teilweise durch ein Gas von der ersten Seite der Filtermembran (21) verdrängt wird, wobei
- das mit dem Rückspülflüssigkeitsstrom in Kontakt befindliche Gas zumindest während des Schritts B) einen Druck von > 1 bar aufweist; und
- das Anlegen des Rückspülflüssigkeitsstroms in Schritt B) derart geschieht, dass der Druck des Rückspülflüssigkeitsstroms mehr als einmal zwischen einem Minimaldruck und einem Maximaldruck wechselt.

2. Verfahren gemäß Anspruch 1, wobei der Rückspülflüssigkeitsstrom in Schritt B) zuvor entnommenes Permeat umfasst.

3. Verfahren gemäß Anspruch 1 oder 2, wobei der Querstromfilter derart angeordnet ist, dass der Zulaufstrom in vertikaler Richtung strömt.

4. Verfahren gemäß einem der Ansprüche 1 bis 3, wobei der Querstromfilter eine Ultrafiltriervorrichtung ist und der Zulaufstrom Slurry-Abwasser aus einem Halbleiterbearbeitungsprozess umfasst.

5. Verfahren gemäß einem der Ansprüche 1 bis 4, wobei das mit dem Rückspülflüssigkeitsstrom in Kontakt befindliche Gas während des Schritts B) einen Druck von ≥ 1,5 bar bis ≤ 2,5 bar aufweist.

6. Verfahren gemäß einem der Ansprüche 1 bis 5, wobei in Schritt B) der Minimaldruck ≥ 0 bar bis ≤ 0,5 bar und/oder der Maximaldruck ≥ 2,5 bar bis ≤ 3 bar beträgt.

7. Verfahren gemäß einem der Ansprüche 1 bis 6, wobei in Schritt B) der Druck des Rückspülflüssigkeitsstroms mit einer Frequenz von ≥ 0,5 Hz bis ≤ 1 Hz zwischen dem Minimaldruck und dem Maximaldruck wechselt.

8. Verfahren gemäß einem der Ansprüche 1 bis 7, wobei nach Schritt B) der folgende Schritt durchgeführt wird:
C) Kontaktieren der zweiten Seite der Filtermembran mit einer Flüssigkeit, welche darin verteilte Gasblasen umfasst und wobei der Druck innerhalb der Gasblasen mehr als einmal zwischen einem Minimaldruck und einem Maximaldruck wechselt.

9. Verfahren gemäß einem der Ansprüche 1 bis 8, wobei das Verfahren in einer Anlage durchgeführt wird, umfassend einen Querstromfilter (20) mit einer Filtermembran (21), einer Zulaufleitung (201) für ein zu filtrierendes Stoffgemisch, einer Abführleitung (103) für den Querstromfilter (20) verlassendes Retentat, einer Flüssigkeitsentzugsleitung (203) für den Querstromfilter (20) verlassendes Permeat sowie einer Rückspülleitung (205);
wobei die Abführleitung (103) mit einer Gasbeaufschlagungsleitung (1008) verbunden ist, in welcher ein erstes steuerbares Ventil (1001) angeordnet ist;
wobei die Gasbeaufschlagungsleitung (1008) und die Flüssigkeitsentzugsleitung (203) durch eine Verbindungsleitung (1009) miteinander verbunden sind, in welcher ein zweites steuerbares Ventil (1002) angeordnet ist und das erste steuerbare Ventil (1001) in der Gasbeaufschlagungsleitung (1008) zwischen der Verbindungsleitung (1009) und der Abführleitung (103) angeordnet ist;
wobei in der Flüssigkeitsentzugsleitung (203) ein drittes steuerbares Ventil (1003) angeordnet ist und wobei die Verbindung zwischen der Flüssigkeitsentzugsleitung (203) und der Verbindungsleitung (1009) zwischen dem Querstromfilter (20) und dem dritten steuerbaren Ventil (1003) angeordnet ist;
wobei in der Rückspülleitung (205) ein viertes steuerbares Ventil (1004) angeordnet ist; und
wobei die Zulaufleitung (201) mit einer Abwasserleitung (1007) verbunden ist, in welcher ein fünftes steuerbares Ventil (1005) angeordnet ist.

10. Verfahren gemäß Anspruch 9, wobei vor, während und nach Schritt B) das erste bis fünfte steuerbare Ventil (1001-1005) nacheinander wie folgt gesteuert werden und wobei "pulsierend" bedeutet, dass sich das jeweilige steuerbare Ventil mehr als einmal öffnet und schließt, wobei Schließfrequenzen für die einzelnen Ventile unabhängig voneinander in einem Bereich von ≥ 0,5 Hz bis ≤ 1 Hz liegen können:
| | **Steuerbares Ventil:** | | | | |
|---|---|---|---|---|---|
| **Nr.** | **Erstes (1001)** | **Zweites (1002)** | **Drittes (1003)** | **Viertes (1004)** | **Fünftes (1005)** |
| **1** | Geschlossen | Geöffnet | Geschlossen | Geschlossen | Geöffnet |
| **2** | Geschlossen | Geschlossen | Geschlossen | Pulsierend | Geöffnet |
| **3** | Geschlossen | Geschlossen | Pulsierend | Geöffnet | Geöffnet |

11. Verfahren gemäß Anspruch 10, wobei das erste bis fünfte steuerbare Ventil (1001-1005) nacheinander weiterhin wie folgt gesteuert werden:
| | **Steuerbares Ventil:** | | | | |
|---|---|---|---|---|---|
| **Nr.** | **Erstes (1001)** | **Zweites (1002)** | **Drittes (1003)** | **Viertes (1004)** | **Fünftes (1005)** |
| **4** | Geöffnet | Geöffnet | Geschlossen | Geöffnet | Pulsierend |
| **5** | Geöffnet | Geschlossen | Geschlossen | Geöffnet | Pulsierend |
| **6** | Geöffnet | Geschlossen | Geschlossen | Geschlossen | Pulsierend |

12. Wiederaufbereitungsvorrichtung zur Wiederaufbereitung von Slurry-Abwasser aus einem Halbleiterbearbeitungsprozess, umfassend:
- ein Filtersystem umfassend
einen Querstromfilter (20) mit einer Filtermembran (21), einer Zulaufleitung (201) für ein zu filtrierendes Stoffgemisch, einer Abführleitung (103) für den Querstromfilter (20) verlassendes Retentat, einer Flüssigkeitsentzugsleitung (203) für den Querstromfilter (20) verlassendes Permeat sowie einer Rückspülleitung (205);
wobei die Abführleitung (103) mit einer Gasbeaufschlagungsleitung (1008) verbunden ist, in welcher ein erstes steuerbares Ventil (1001) angeordnet ist;
wobei die Gasbeaufschlagungsleitung (1008) und die Flüssigkeitsentzugsleitung (203) durch eine Verbindungsleitung (1009) miteinander verbunden sind, in welcher ein zweites steuerbares Ventil (1002) angeordnet ist und das erste steuerbare Ventil (1001) in der Gasbeaufschlagungsleitung (1008) zwischen der Verbindungsleitung (1009) und der Abführleitung (103) angeordnet ist;
wobei in der Flüssigkeitsentzugsleitung (203) ein drittes steuerbares Ventil (1003) angeordnet ist und wobei die Verbindung zwischen der Flüssigkeitsentzugsleitung (203) und der Verbindungsleitung (1009) zwischen dem Querstromfilter (20) und dem dritten steuerbaren Ventil (1003) angeordnet ist;
wobei in der Rückspülleitung (205) ein viertes steuerbares Ventil (1004) angeordnet ist; und
wobei die Zulaufleitung (201) mit einer Abwasserleitung (1007) verbunden ist, in welcher ein fünftes steuerbares Ventil (1005) angeordnet ist;
- einen Kreislaufbehälter (10) zum Aufnehmen Slurry enthaltenden Abwassers;
- eine mit dem Kreislaufbehälter (10) verbundene Abwasserzuführleitung (101);
- einen über eine Zulaufleitung (201) für ein zu filtrierendes Stoffgemisch (201) mit dem Kreislaufbehälter (10) verbundenen Querstromfilter (20) zum Aufkonzentrieren fortlaufend aus dem Kreislaufbehälter (10) entnommenen Mischabwassers mittels Flüssigkeitsentzug;
- eine Abwasserrückführleitung (105) zum Leiten des aufkonzentrierten Abwasser in den Kreislaufbehälter (10); und
- eine Steuerungsvorrichtung, welche eingerichtet ist,
zeitlich nacheinander einen Filtrationsschritt, bei dem während einer fortlaufenden Entnahme von Mischabwasser aus dem Kreislaufbehälter (10) und seiner Aufkonzentrierung mittels der Ultrafiltervorrichtung dem Kreislaufbehälters (10) fortlaufend frisches Abwasser zugeführt wird, und einen Konzentrationsschritt durchzuführen, bei dem während der fortlaufenden Entnahme von Mischabwasser aus dem Kreislaufbehälter (10) und seiner Aufkonzentrierung mittels der Ultrafiltervorrichtung die Zufuhr des frischen Abwassers zum Kreislaufbehälter (10) vermindert oder im Wesentlichen abgestellt ist; und weiterhin
ein Verfahren gemäß einem oder mehreren der Ansprüche 1 bis 11 ablaufen zu lassen.

13. Wiederaufbereitungsvorrichtung gemäß Anspruch 12, wobei im Filtersystem der Querstromfilter (20) eine Ultrafiltriervorrichtung ist.

## Claims

1. Method of cleaning a filter comprising the steps of:
A) providing a cross flow filter (20), wherein the cross flow filter (20) comprises a filter membrane (21) and is adapted to extract a liquid permeate flow from a feed flow flowing past the filter membrane (21),
wherein the filter membrane (21) has a first side facing the permeate flow and a second side opposite to the first side and facing the feed flow, and
wherein on the second side of the filter membrane (21) deposits (1010) are located which are at least partially to be removed;
B) supplying a backflushing liquid flow through the filter membrane (21);
**characterized in that**
- before supplying the backflushing liquid flow in step B) permeate located on the first side of the filter membrane (21) is at least partially displaced by a gas from the first side of the filter membrane (21), wherein
the gas in contact with the backflushing liquid flow at least during step B) has a pressure of > 1 bar, and
the supply of the backflushing liquid flow in step B) takes place in such a way that the pressure of the backflushing liquid flow varies more than once between a minimum pressure and a maximum pressure.

2. Method according to claim 1, wherein the backflushing liquid flow in step B) contains previously extracted permeate.

3. Method according to claim 1 or 2, wherein the cross flow filter is arranged such that the feed flow flows in the vertical direction.

4. Method according to any one of claims 1 to 3, wherein the cross flow filter is an ultrafiltration device and the feed flow contains slurry wastewater from a semiconductor processing.

5. Method according to any one of claims 1 to 4, wherein the gas in contact with the backflushing liquid flow during step B) has a pressure of ≥ 1.5 bar to ≤ 2.5 bar.

6. Method according to any one of claims 1 to 5, wherein in step B) the minimum pressure is ≥ 0 bar to ≤ 0.5 bar and/or the maximum pressure is ≥ 2.5 bar to ≤ 3 bar.

7. Method according to any one of claims 1 to 6, wherein in step B) the pressure of the backflushing liquid flow varies at a frequency of ≥ 0.5 Hz to ≤ 1 Hz between the minimum pressure and the maximum pressure.

8. Method according to any one of claims 1 to 7, wherein after step B) the following step is carried out:
C) contacting the second side of the filter membrane with a liquid comprising gas bubbles distributed therein, wherein the pressure within the gas bubbles varies more than once between a minimum pressure and a maximum pressure.

9. Method according to any one of claims 1 to 8, wherein the method is carried out in a plant comprising a cross flow filter (20) with a filter membrane (21), a feed line (201) for a mixture of substances to be filtered, a discharge line (103) for a retentate exiting the cross flow filter (20), a liquid extraction line (203) for a permeate exiting the cross flow filter (20) and a backflushing line (205),
wherein the discharge line (103) is connected to a gas supply line (1008) in which a first controllable valve (1001) is disposed,
wherein the gas supply line (1008) and the liquid extraction line (203) are interconnected by a connection line (1009) in which a second controllable valve (1002) is disposed, and wherein the first controllable valve (1001) is disposed in the gas supply line (1008) between the connection line (1009) and the discharge line (103),
wherein in the liquid extraction line (203) a third controllable valve (1003) is disposed, and wherein the connection between the liquid extraction line (203) and the connection line (1009) is disposed between the cross flow filter (20) and the third controllable valve (1003),
wherein in the backflushing line (205) a fourth controllable valve (1004) is disposed, and
wherein the feed line (201) is connected to a wastewater line (1007) in which a fifth controllable valve (1005) is disposed.

10. Method according to claim 9, wherein prior to, during and after step B) the first to fifth controllable valves (1001 - 1005) are sequentially controlled as follows, wherein "pulsating" means that the respective controllable valve opens and closes more than once, wherein the closing frequencies for the individual valves can be independently in a range from ≥ 0.5 Hz to ≤ 1 Hz:
| | Controllable valve: | | | | |
|---|---|---|---|---|---|
| No. | First (1001) | Second (1002) | Third (1003) | Forth (1004) | Fifth (1005) |
| 1 | Closed | Open | Closed | Closed | Open |
| 2 | Closed | Closed | Closed | Pulsating | Open |
| 3 | Closed | Closed | Pulsating | Open | Open |

11. Method according to claim 10, wherein the first to fifth controllable valves (1001 - 1005) are further sequentially controlled as follows:
| | Controllable valve: | | | | |
|---|---|---|---|---|---|
| No. | First (1001) | Second (1002) | Third (1003) | Forth (1004) | Fifth (1005) |
| 4 | Open | Open | Closed | Open | Pulsating |
| 5 | Open | Closed | Closed | Open | Pulsating |
| 6 | Open | Closed | Closed | Closed | Pulsating |

12. Recycling device for recycling slurry wastewater from a semiconductor processing comprising:
- a filter system including
a cross flow filter (20) comprising a filter membrane (21), a feed line (201) for a mixture of substances to be filtered, a discharge line (103) for a retentate exiting the cross flow filter (20), a liquid extraction line (203) for a permeate exiting the cross flow filter (20) and a backflushing line (205),
wherein the discharge line (103) is connected to a gas supply line (1008), in which a first controllable valve (1001) is disposed,
wherein the gas supply line (1008) and the liquid extraction line (203) are interconnected by a connection line (1009) in which a second controllable valve (1002) is disposed, and wherein the first controllable valve (1001) is disposed in the gas supply line (1008) between the connection line (1009) and the discharge line (103),
wherein in the liquid extraction line (203) a third controllable valve (1003) is disposed, and wherein the connection between the liquid extraction line (203) and the connection line (1009) is disposed between the cross flow filter (20) and the third controllable valve (1003),
wherein in the backflushing line (205) a fourth controllable valve (1004) is disposed, and
wherein the feed line (201) is connected to a wastewater line (1007) in which a fifth controllable valve (1005) is disposed;
- a circulation container (10) for accommodating slurry containing wastewater;
- a wastewater supply line (101) connected to the circulation container (10);
- a cross flow filter (20) connected to the circulation container (10) via a feed line (201) for a mixture of substances (201) to be filtered for concentrating mixed wastewater continuously extracted from the circulation container (10) by means of liquid extraction;
- a wastewater return line (105) for guiding the concentrated wastewater into the circulation container (10); and
- a control device which is adapted
to carry out successive in time a filtration step in which during a continuous extraction of mixed wastewater from the circulation container (10) and its concentration by means of the ultrafiltration device fresh wastewater is continuously supplied to the circulation container (10), and a concentration step in which during the continuous extraction of mixed wastewater from the circulation container (10) and its concentration by means of the ultrafiltration device the supply of fresh wastewater to the circulation container (10) is reduced or essentially turned off; and further
to carry out a method according to one or more of claims 1 to 11.

13. Recycling device according to claim 12, wherein in the filter system the cross flow filter (20) is an ultrafiltration device.

## Revendications

1. Procédé de nettoyage d'un filtre comprenant les étapes suivantes :
A) Fourniture d'un filtre à écoulement transversal (20), lequel filtre à écoulement transversal (20) comporte une membrane de filtration (21) et est aménagé pour prélever un flux de perméat liquide dans un flux entrant passant sur la membrane de filtration (21)
et la membrane de filtration (21) comprend un premier côté dirigé vers le flux de perméat et un deuxième côté opposé au premier côté et dirigé vers le flux entrant
et dans lequel des dépôts (1010) à enlever se trouvent au moins en partie sur le deuxième côté de la membrane de filtration (21) :
B) Application d'un flux de liquide de rinçage à contre-courant à travers la membrane de filtration (21) ;
**caractérisé en ce que**
- avant l'application d'un flux de liquide de rinçage à contre-courant à l'étape B), le perméat se trouvant sur le premier côté de la membrane de filtration (21) est refoulé au moins en partie par un gaz du premier côté de la membrane de filtration (21),
- le gaz se trouvant en contact avec le flux de liquide de rinçage à contre-courant ayant une pression supérieure à 1 bar au moins pendant l'étape B) ; et
- l'application d'un flux de liquide de rinçage à contre-courant à l'étape B) se produisant de telle façon que la pression du flux de liquide de rinçage à contre-courant alterne plus d'une fois entre une pression minimale et une pression maximale.

2. Procédé selon la revendication 1, dans lequel le flux de liquide de rinçage à contre-courant comporte un perméat prélevé au préalable à l'étape B).

3. Procédé selon la revendication 1 ou la revendication 2, dans lequel le filtre à écoulement transversal est disposé de manière à ce que le flux entrant coule dans le sens vertical.

4. Procédé selon l'une quelconque des revendications 1 à 3, dans lequel le filtre à courant transversal est un dispositif d'ultrafiltration et le flux entrant comporte des effluents de boues provenant d'un processus d'usinage de semi-conducteurs.

5. Procédé selon l'une quelconque des revendications 1 à 4, dans lequel le gaz se trouvant en contact avec le flux de liquide de rinçage à contre-courant pendant l'étape B) a une pression de ≥ 1,5 bar à ≤ 2,5 bars.

6. Procédé selon l'une quelconque des revendications 1 à 5, dans lequel, à l'étape B), la pression minimale est de ≥ 0 bar à ≤ 0,5 bar et/ou la pression maximale est de ≥ 2,5 bars à ≤ 3 bars.

7. Procédé selon l'une quelconque des revendications 1 à 6, dans lequel, à l'étape B), la pression du flux de liquide de rinçage à contre-courant alterne entre la pression minimale et la pression maximale avec une fréquence de ≥ 0,5 Hz à ≤ 1 Hz.

8. Procédé selon l'une quelconque des revendications 1 à 7, dans lequel l'étape B) est suivie de l'étape ci-dessous :
C) Mise en contact du deuxième côté de la membrane de filtration avec un liquide qui comporte des bulles de gaz réparties à l'intérieur, la pression à l'intérieur des bulles de gaz alternant plus d'une fois entre une pression minimale et une pression maximale.

9. Procédé selon l'une quelconque des revendications 1 à 8, **caractérisé en ce que** le procédé est réalisé dans une installation comprenant un filtre à écoulement transversal (20) doté d'une membrane de filtration (21), d'une conduite d'arrivée (201) pour un mélange de matières à filtrer, d'une conduite d'évacuation (103) pour le rétentat quittant le filtre à écoulement transversal (20), d'une conduite de prélèvement de liquide (203) pour le perméat quittant le filtre à courant transversal (20) ainsi que d'une conduite de rinçage à contre-courant (205) ;
la conduite d'évacuation (103) étant reliée à une conduite d'exposition à un gaz (1008) dans laquelle est disposée une première soupape apte à être commandée (1001) ;
la conduite d'exposition à un gaz (1008) et la conduite de prélèvement de liquide (203) étant reliées ensemble par une conduite de liaison (1009) dans laquelle est disposée une deuxième soupape apte à être commandée (1002) et la première soupape apte à être commandée (1001) étant disposée dans la conduite d'exposition à un gaz (1008) entre la conduite de liaison (1009) et la conduite d'évacuation (103) ;
une troisième soupape apte à être commandée (1003) étant disposée dans la conduite de prélèvement de liquide (203) et la liaison entre la conduite de prélèvement de liquide (203) et la conduite de liaison (1009) étant disposée entre le filtre à courant transversal (20) et la troisième soupape apte à être commandée (1003) ;
une quatrième soupape apte à être commandée (1004) étant disposée dans la conduite de rinçage à contre-courant (205) ; et la conduite d'arrivée (201) étant reliée à une conduite d'effluents (1007) dans laquelle est disposée une cinquième soupape apte à être commandée (1005).

10. Procédé selon la revendication 9 dans lequel les première à cinquième soupapes aptes à être commandées (1001-1005) sont commandées l'une après l'autre avant, pendant et après l'étape B), et dans lequel "à impulsion" signifie que la soupape apte à être commandée concernée s'ouvre et se ferme plus d'une fois, les fréquences de fermeture des différentes soupapes pouvant se trouver, indépendamment l'une de l'autre, dans une plage de ≥ 0,5 Hz à ≤ 1 Hz :
| | **Soupape apte à être commandée** | | | | |
|---|---|---|---|---|---|
| **No** | **Première (1001)** | **Deuxième (1002)** | **Troisième (1003)** | **Quatrième (1004)** | **Cinquième (1005)** |
| **1** | Fermée | Ouverte | Fermée | Fermée | Ouverte |
| **2** | Fermée | Fermée | Fermée | A impulsion | Ouverte |
| **3** | Fermée | Fermée | A impulsion | Ouverte | Ouverte |

11. Procédé selon la revendication 10, dans lequel les première à cinquième soupapes aptes à être commandées (1001-1005) continuent à être commandées l'une après l'autre comme suit :
| | **Soupape apte à être commandée** | | | | |
|---|---|---|---|---|---|
| **No** | **Première (1001)** | **Deuxième (1002)** | **Troisième (1003)** | **Quatrième (1004)** | **Cinquième (1005)** |
| **4** | Ouverte | Ouverte | Fermée | Ouverte | A impulsion |
| **5** | Ouverte | Fermée | Fermée | Ouverte | A impulsion |
| **6** | Ouverte | Fermée | Fermée | Fermée | A impulsion |

12. Dispositif pour le retraitement d'effluents de boues provenant d'un processus d'usinage de semi-conducteurs, comprenant :
- un système de filtration comprenant
un filtre à écoulement transversal (20) doté d'une membrane de filtration (21), d'une conduite d'arrivée (201) pour un mélange de matières à filtrer, d'une conduite d'évacuation (103) pour le rétentat quittant le filtre à écoulement transversal (20), d'une conduite de prélèvement de liquide (203) pour le perméat quittant le filtre à écoulement transversal (20) ainsi qu'une conduite de rinçage à contre-courant (205) ;
la conduite d'évacuation (103) étant reliée à une conduite d'exposition à un gaz (1008) dans laquelle est disposée une première soupape apte à être commandée (1001) ;
la conduite d'exposition à un gaz (1008) et la conduite de prélèvement de liquide (203) étant reliées ensemble par une conduite de liaison (1009) dans laquelle est disposée une deuxième soupape apte à être commandée (1002) et la première soupape apte à être commandée (1001) étant disposée dans la conduite d'exposition à un gaz (1008) entre la conduite de liaison (1009) et la conduite d'évacuation (103) ;
une troisième soupape apte à être commandée (1003) étant disposée dans la conduite de prélèvement de liquide (203) et la liaison entre la conduite de prélèvement de liquide (203) et la conduite de liaison (1009) étant disposée entre le filtre à courant transversal (20) et la troisième soupape apte à être commandée (1003) ;
une quatrième soupape apte à être commandée (1004) étant disposée dans la conduite de rinçage à contre-courant (205) ; et
la conduite d'arrivée (201) étant reliée à une conduite d'effluents (1007) dans laquelle est disposée une cinquième soupape apte à être commandée (1005) ;
- un récipient de récupération (10) pour récupérer les effluents contenant les boues ;
- une conduite d'acheminement des effluents (101) reliée au récipient de récupération (10) ;
- un filtre à écoulement transversal (20) relié au récipient de récupération (10) par l'intermédiaire d'une conduite d'admission (201) pour un mélange de matières à filtrer (201), destiné à la concentration en continu des effluents mixtes prélevés dans le récipient de récupération par prélèvement de liquide ;
- une conduite de retour des effluents (105) destinée à conduire les effluents concentrés dans le récipient de récupération (10) ;
- un dispositif de commande aménagé
pour exécuter consécutivement dans le temps une étape de filtration lors de laquelle, pendant un prélèvement continu d'effluents mixtes dans le récipient de récupération (10) et leur concentration au moyen du dispositif d'ultrafiltration, des effluents frais sont acheminés en continu vers le récipient d'ultrafiltration (10), et une étape de concentration lors de laquelle l'acheminement des effluents frais vers le récipient de récupération (10) est réduit ou essentiellement arrêté pendant le prélèvement en continu d'effluents mixtes dans le réservoir de récupération (10) et pendant leur concentration au moyen du dispositif d'ultrafiltration ; et, en outre pour laisser se dérouler un procédé selon l'une ou plusieurs des revendications 1 à 11.

13. Dispositif de retraitement selon la revendication 12, dans lequel le filtre à écoulement transversal (20) du système de filtration est un dispositif d'ultrafiltration.
